# EUROPEAN PATENT SPECIFICATION

(11) **EP 4 340 314 B1**
(45) Date of publication and mention of the grant of the patent: **02.09.2026**
(21) Application number: 21952164.8
(22) Date of filing: 02.08.2021
(51) Int. Cl.: H04L 41/50, H04L 47/28, H04W 28/02, H04W 72/543, H04W 28/24, H04L 47/24

(54) **DATA TRANSMISSION METHOD AND APPARATUS, DEVICE, AND STORAGE MEDIUM**
DATENÜBERTRAGUNGSVERFAHREN UND -VORRICHTUNG, VORRICHTUNG UND SPEICHERMEDIUM
PROCÉDÉ ET APPAREIL DE TRANSMISSION DE DONNÉES, DISPOSITIF, ET SUPPORT DE STOCKAGE

(43) Date of publication of application: 20.03.2024
(73) Proprietor: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); LU, Qianxi, Dongguan, Guangdong 523860 (CN); GUO, Yali, Dongguan, Guangdong 523860 (CN)
(74) Representative: Santarelli
(86) International application number: PCT/CN2021/110140
(87) International publication number: WO 2023/010254

(56) References cited:
- WO-A1-2017/201677
- CN-A- 102 904 908
- CN-A- 109 818 874
- US-A1- 2003 236 904
- US-A1- 2013 263 201
- QUALCOMM INCORPORATED: "Potential Enhancements for XR", vol. RAN WG1, no. e-Meeting; 20210412 - 20210420, 7 April 2021 (2021-04-07), XP052177993, Retrieved from the Internet <URL:https://ftp.3gpp.org/tsg_ran/WG1_RL1/TSGR1_104b-e/Docs/R1-2103195.zip R1-2103195 Potential Enhancements for XR.docx> [retrieved on 20210407]
- QUALCOMM INCORPORATED: "New SID on further enhancements for XR services", vol. SA WG2, no. e-meeting; 20210517 - 20210528, 10 May 2021 (2021-05-10), XP052004959, Retrieved from the Internet <URL:https://ftp.3gpp.org/tsg_sa/WG2_Arch/TSGS2_145E_Electronic_2021-05/Docs/S2-2104662.zip S2-2104662 New SID proposalonXR enhancements.doc> [retrieved on 20210510]
- QUALCOMM INCORPORATED: "New SID: Further enhancements for XR services FS_FEX", vol. SA WG2, no. Electronic meeting; 20210517 - 20210528, 10 May 2021 (2021-05-10), XP052004958, Retrieved from the Internet <URL:https://ftp.3gpp.org/tsg_sa/WG2_Arch/TSGS2_145E_Electronic_2021-05/Docs/S2-2104661.zip S2-2104661 New SID proposalonXR enhancements.pdf> [retrieved on 20210510]
- ABD EL AL ET AL: "Unequal error protection for real-time video in mobile ad hoc networks via multi-path transport", COMPUTER COMMUNICATIONS, ELSEVIER SCIENCE PUBLISHERS BV, AMSTERDAM, NL, vol. 30, no. 17, 2 November 2007 (2007-11-02), pages 3293 - 3306, XP022326590, ISSN: 0140-3664
- ETRI: "Cooperative QoS/QoE Control for Multimedia Applications Document for Discussion & Proposal", 3GPP TSG-SA4 #66 TDOC S4-110954; 7-11 NOVEMBER, 2011, JEJU ISLAND, SOUTH KOREA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 1 January 2011 (2011-01-01) - 11 November 2011 (2011-11-11), Mobile Competence Centre ; 650, route des Lucioles ; F-06921 Sophia-Antipolis Cedex ; France, pages 1 - 5, XP093032992

## Description

### TECHNICAL FIELD

Embodiments of the disclosure relate to the technical field of communications, and in particular to a method of data transmission and an access network device.

### BACKGROUND

In a 5th Generation (5G) New Radio (NR) system, Quality of Service (QoS) parameters are provided for a QoS flow, such as 5G QoS Identifier (5QI), Allocation and Retention Priority (ARP), a bit rate, etc.

As a 3rd Generation Partnership Project (3GPP) system supports vertical industries more and more widely and deeply, Ultra Reliability and Low Latency Communication (URLLC) seeks to support transmission of industrial automation, transmission automation, intelligent power and other services in a 5G system, and these services put forward higher requirements for data transmission process. Related technology is known from the document entitled "Potential Enhancements for XR", 3GPP DRAFT; R1-2103195, by QUALCOMM INCORPORATED, which discusses potential enhancements needed to better support XR over NR from power, capacity and mobility perspectives.

Therefore, further research is required for QoS guarantee of data transmission in the 5G system.

### SUMMARY

Embodiments of the disclosure provide a method of data transmission and an access network device. The invention is set out in the amended set of claims.

The technical solutions provided in the embodiments of the disclosure may include the following beneficial effects.

The disclosure provides a method of data transmission. Before sending a to-be-transmitted packet, a first object to which the to-be-transmitted packet belongs is determined and the packet is transmitted according to transmission requirements and/or QoS parameters for the first object. QoS guarantee for an application, a data flow, a QoS flow, an ADU, a frame, a coded slice and a unit set are achieved by providing information on the transmission requirements and/or QoS parameters for the application, the data flow, the QoS flow, the ADU, the frame, the coded slice, the unit set or other levels, thereby meeting reliability and delay requirements of the above object during data transmission.

The disclosure further provides another method of data transmission. In a first situation, transmission processing is performed on a packet belonging to a first object by using a transmission processing mechanism corresponding to the first situation. Data transmission process is more flexible and controllable by providing the first situation and the corresponding transmission processing mechanism.

### BRIEF DESCRIPTION OF THE DRAWINGS

FIG. 1 is a schematic diagram of a network architecture according to an embodiment of the disclosure.
FIG. 2 is a schematic diagram exemplarily showing an uplink transmission process of a terminal device.
FIG. 3 is a schematic diagram exemplarily showing a wireless protocol architecture related to a Radio Access Network (RAN).
FIG. 4 is a flowchart of a method of data transmission according to an embodiment of the disclosure.
FIG. 5 is a flowchart of a method of data transmission according to another embodiment of the disclosure.
FIG. 6 is a flowchart of a method of data transmission according to another embodiment of the disclosure.
FIG. 7 is a schematic diagram of a data low-preferential transmission processing method according to another embodiment of the disclosure.
FIG. 8 is a schematic diagram of a data high-preferential transmission processing method according to another embodiment of the disclosure.
FIG. 9 is a block diagram of an apparatus of data transmission according to an embodiment of the disclosure.
FIG. 10 is a block diagram of an apparatus of data transmission according to another embodiment of the disclosure.
FIG. 11 is a schematic structural diagram of a device according to a non-claimed embodiment of the disclosure.

### DETAILED DESCRIPTION

In order to make objectives, technical solutions and advantages of the disclosure clearer, the embodiments of the disclosure will be further described in detail below with reference to the drawings.

Network architectures and business scenarios described in the embodiments of the disclosure are intended to explain the technical solutions of the embodiments of the disclosure more clearly, and do not constitute limitations to the technical solutions provided in the embodiments of the disclosure. It may be known by those of ordinary skill in the art that with the evolution of the network architectures and the emergence of new business scenarios, the technical solutions provided in the embodiments of the disclosure are also applicable to similar technical problems.

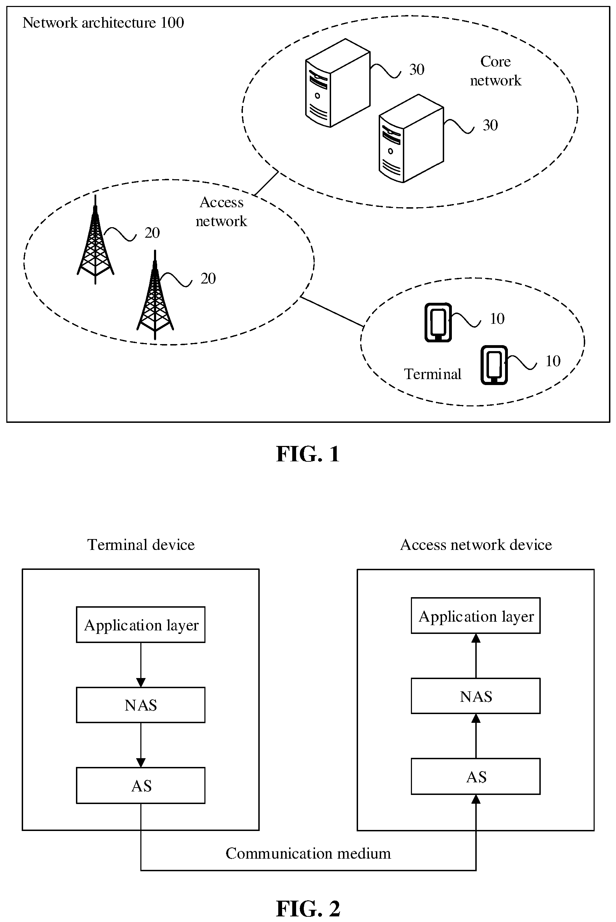

With reference to FIG. 1, FIG. 1 illustrates a schematic diagram of a network architecture according to an embodiment of the disclosure is shown. The network architecture 100 may include a terminal device(s) 10, an access network device(s) 20 and a core network device(s) 30.

The terminal device 10 may refer to a User Equipment (UE), an access terminal, a subscriber unit, a subscriber station, a mobile site, a mobile station, a remote station, a remote terminal, a mobile device, a wireless communication device, a user agent or a user device. Optionally, the terminal device 10 may also be a cellular phone, a cordless phone, a Session Initiation Protocol (SIP) phone, a Wireless Local Loop (WLL) station, a Personal Digital Assistant (PDA), a handheld device with a wireless communication function, a computing device or other processing devices connected to a wireless modem, a vehicle-mounted device, a wearable device, a terminal device in a 5th Generation System (5GS), or a terminal device in a future evolved Public Land Mobile Network (PLMN), etc., which are not limited in the embodiments of the disclosure. For the convenience of descriptions, the above-mentioned devices are collectively referred to as the terminal device. There are usually multiple terminal devices 10, and one or more terminal devices 10 may be distributed in a cell managed by each access network device 20.

The access network device 20 is a device deployed in an access network to provide a wireless communication function for the terminal device 10. The access network device 20 may include various forms of macro base stations, micro base stations, relay stations, access points, etc. In systems using different radio access technologies, devices with functions of the access network device may have different names, for example, they are referred to as gNodeB or gNB in a 5th Generation (5G) New Radio (NR) system. With the evolution of communication technologies, the name "access network device" may change. For the convenience of descriptions, in the embodiments of the disclosure, the above-mentioned apparatuses providing the wireless communication function for the terminal device 10 are collectively referred to as the access network device. Optionally, a communication relationship may be established between the terminal device 10 and the core network device 30 through the access network device 20. Exemplarily, in a Long Term Evolution (LTE) system, the access network device 20 may be an Evolved Universal Terrestrial Radio Access Network (EUTRAN) or one or more eNodeBs in the EUTRAN; In an NR system, the access network device 20 may be a Radio Access Network (RAN) or one or more gNBs in the RAN. In the embodiments of the disclosure, the network device refers to the access network device 20, unless specified otherwise.

The core network device 30 mainly functions to provide user connections, user management and service bear, and is used as a bearer network to provide an interface to external networks. For example, in the 5G NR system, a core network user plane includes a User Plane Function (UPF); a core network control plane includes an Authentication Server Function (AUSF), a Network Slice Selection Function (NSSF), a Network Exposure Function (NEF), a Network Function Repository Function (NRF), Unified Data Management (UDM), a Policy Control Function (PCF), and an Application Function (AF). Functions of these functional entities are as follows.
(1) UPF: perform forwarding of user data packets according to routing rules of a Session Management Function (SMF);
(2) AUSF: perform UE security authentication;
(3) NSSF: select a network slice for the UE;
(4) NEF: expose network functions to a third party through northbound Application Programming Interface (API) interface;
(5) NRF: provide storage and selection functions of network functional entity information for other network elements;
(6) UDM: user subscription context management;
(7) PCF: user policy management;
(8) AF: user application management.

In an example, the access network device 20 and the core network device 30 communicate with each other through a certain air interface technology, such as an NG interface in the 5G NR system. The access network device 20 and the terminal 10 communicate with each other through a certain air interface technology, such as a Uu interface.

The "5G NR system" in the embodiments of the disclosure may also be referred to as a 5G system or an NR system, but those skilled in the art may understand its meaning. The technical solutions described in the embodiments of the disclosure may be applied to the 5G NR system, or subsequent evolved systems of the 5G NR system.

In the embodiments of the disclosure, UE and the terminal device express the same meaning, and UE and the terminal device may be replaced by each other; the network device and the access network device express the same meaning, and the network device and the access network device may be replaced by each other.

An architecture of the terminal device and the access network device is introduced below.

Each of the terminal device and the access network device may include an application layer, a Non Access Stratum (NAS) and an Access Stratum (AS).

The application layer is a user interface of the system, located at the top of the architecture and configured to manage and process data. An object managed and processed by the application layer of the terminal device is data acquired by a perception layer, and data of the application layer of the access network device is data received from a core network.

Processes between the NAS and the AS are divided by a protocol stack. In the protocol stack, a Radio Resource Control (RRC) layer, a Radio Access Network Application Protocol (RANAP) layer and protocol layers below them are referred to as AS, while Mobility Management (MM), Session Management (SM), Short Messaging Service (SMS) or the like above the RRC layer and the RANAP layer are referred to as NAS.

Processes of the NAS mainly include MM in a circuit switched (CS) domain, call control in the CS domain, MM in a packet switched (PS) domain, and SM in the PS domain.

Processes of the AS mainly include PLMN selection, cell selection, and radio resource management. The processes of the AS are processes of some bottom layers, such as a Packet Data Convergence Protocol (PDCP) layer, a Service Data Adaptation Protocol (SDAP) layer, a Radio Link Control (RLC) layer, a Medium Access Control (MAC) layer, a physical layer or the like, through which an underlying bearer is built for signaling processes of an upper layer.

The PDCP layer is used for data transmission, copying, encryption and decryption, etc.

The SDAP layer may add an identifier of a Quality of Service (QoS) flow, i.e., a QoS Flow ID (QFI) value to a data packet, and a receiving end reads the value from a SDAP header of the data packet and maps one or more QoS flows to a Data Radio Bearer (DRB).

The MAC layer is configured to map data of a Logical Channel (LCH) to a transport channel, and transmit the mapped Transport Block (TB) data of the transport channel to the physical layer.

The RLC layer is configured to guarantee data transmission services and reliable QoS.

With reference to FIG. 2, FIG. 2 illustrates an uplink data transmission process of a terminal device.

In an uplink transmission process of the terminal device, the application layer of the terminal device is configured to generate user data, and the generated user data is transmitted to the AS, the NAS and the application layer of the access network device through the NAS and the AS of the terminal device. A downlink transmission process of the access network device is similar thereto, and however, data processed by the application layer of the access network device is usually not generated by the access network device, but instead, is sent to the access network device by the core network.

A wireless protocol architecture related to the RAN is introduced below.

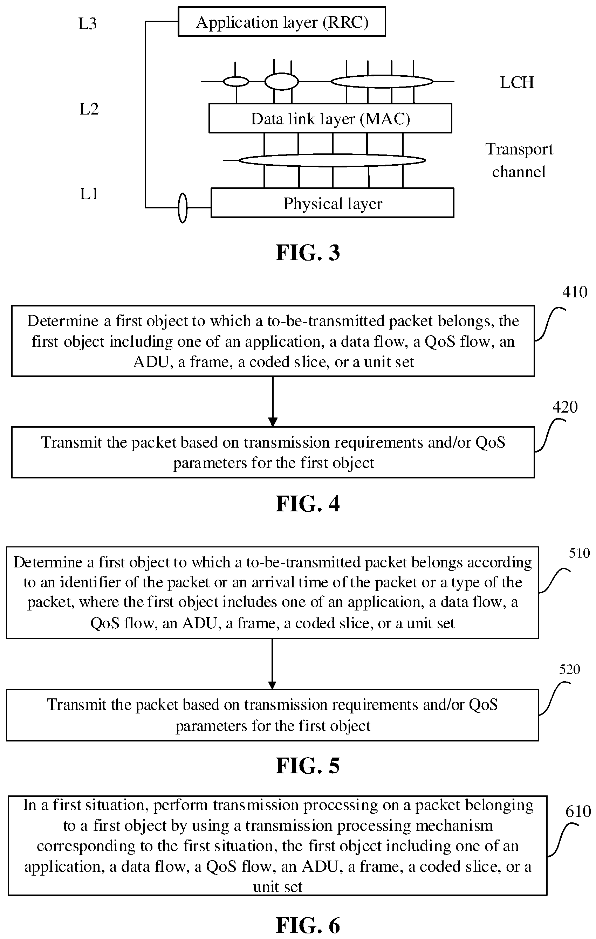

With reference to FIG. 3, FIG. 3 illustrates a wireless protocol architecture related to a RAN.

A radio interface is composed of a physical layer (L1, layer 1), a data link layer (L2, layer 2) and an application layer (L3, layer 3).

The main tasks of the physical layer is to provide data transmission services for high layers, and the physical layer provides an interface for the data transmission services through a transport channel of a MAC sublayer.

The data link layer is located between the physical layer and a network layer, and provides services for the network layer based on services provided by the physical layer. The data link layer is configured to achieve transmission of packet data between the terminal device and the access network device through the LCHs. In the data link layer, data is subjected to corresponding framing and de-framing processing with a fixed frame structure through a Common Public Radio Interface (CPRI). The data link layer adds a data link layer header (DH) to a data packet transmitted to the upper layer. The data link layer includes a SDAP layer, a PDCP layer, a RLC layer and a MAC layer. Protocols supported by the data link layer include a Serial Line Internet Protocol (SLIP), a Compressed Serial Line Internet Protocol (CSLIP), a Point to Point Protocol (PPP), an Address Resolution Protocol (ARP), etc. Parameters in the data link layer include a Maximum Transfer Unit (MTU).

A Protocol Data Unit (PDU) is introduced below.

In two interacting devices, information exchanged by protocol in the protocol layer between peer layers is referred to as a PDU, a PDU in the physical layer is referred to as a data bit, a PDU in the data link layer is referred to as a frame, a PDU in the network layer is referred to as a data packet, a PDU in a transmission layer is referred to as a data segment, and PDUs in higher layers are collectively referred to as data. Structure of the PDU is irrelevant to a transmission network.

Taking the terminal device as an example, data generated by the application layer of the terminal device may be packaged layer by layer when it is transmitted downwards. An upper layer protocol may use services provided by a lower layer protocol, through package. Different layers may add corresponding messages before the data when they process the transmitted data, and a behavior of adding corresponding messages before the data is referred to as package.

Next, a retransmission mechanism in the NR system is introduced.

The NR system supports two retransmission mechanisms, i.e., a Hybrid Automatic Repeat reQuest (HARQ) mechanism in the MAC layer and an Automatic Repeat reQuest (ARQ) mechanism in the RLC layer.

Main functions of the HARQ mechanism are data storage, requesting retransmission and combined demodulation. During data transmission, when decoding of data received by a receiving device fails, the unsuccessfully received data may apply for a HARQ process; HARQ saves the received data in a HARQ buffer, and requests a sending device to retransmit data; the receiving device combines the received retransmission data with the previously received data and then performs decoding; when the decoding fails, HARQ may request retransmission again, and the terminal device combines the received retransmission data again. HARQ reduces the number of retransmissions through diversity gain, thereby reducing delay during data transmission.

The HARQ mechanism may be divided into two types, i.e., synchronous HARQ and asynchronous HARQ, in a time domain. In the synchronous HARQ, data retransmission may only occur in a fixed subframe. In the asynchronous HARQ, retransmission may occur at any moment. The asynchronous HARQ is more flexible in terms of scheduling.

The ARQ mechanism of the RLC layer is only directed to data transmission of an acknowledgement (ACK) mode.

Next, relevant background of eXtended Reality (XR)/ Ultra Reliability and Low Latency Communication (URLLC) is introduced.

As a 3rd Generation Partnership Project (3GPP) system supports vertical industries more and more widely and deeply, for example, URLLC seeks to support transmission of industrial automation, transmission automation, intelligent power and other services in the 5G system. XR seeks to support service transmission of Augmented Reality (AR) or Virtual Reality (VR) or cloud gaming. Generally, these services have reliability and delay requirements, and therefore it should meet QoS requirements for data transmission when resources are scheduled for the terminal device. In view of the terminal device, it also needs to meet power consumption of the terminal device and avoid unnecessary power consumption. Furthermore, considering a problem of access of a large number of terminal devices supporting the services, it also needs to guarantee requirements of network capacity when resources are allocated.

For example, URLLC XR needs to support a service with minimum 0.5 ms and 99.999% consideration requirements. The service is periodic or pseudo-periodic. "Pseudo-periodic" means that there is jitter at an arrival time of the service, that is, the service may not arrive at a definite time point, but instead, the service may arrive at any moment within a time range. Furthermore, period of the service may be a non-integer period, such as 16.67 ms. Furthermore, arrival time of different service flows of the same service may vary greatly. For example, in AR, period of an uplink pose is 4 ms, while period of an uplink video is 16.67 ms.

QoS parameters in the related art are introduced below.

The 5G NR system supports many QoS parameters, including 5G QoS Identifier (5QI), Allocation and Retention Priority (ARP), a bit rate, etc. 5QI is configured to index a 5G QoS characteristic, and its corresponding QoS characteristics include Resource Type (RT), Default Priority Level (DPL), Packet Delay Budget (PDB), Default Maximum Data Burst Volume (DMDBV), etc. The RT includes Guaranteed Bit Rate (GBR), non-GBR, etc. The ARP parameter contains information such as priority level, pre-emption capability, pre-emption vulnerability or the like; the priority level defines priority of resource request of the terminal device. When system resources are limited, the access network device determines whether a new QoS flow is accepted based on the ARP parameter. The bit rate includes Guarantee Flow Bit Rate (GFBR), Maximum Flow Bit Rate (MFBR), Aggregate Maximum Bit Rate (ABR) or the like in uplink and downlink processes.

In the related art, all of QoS is provided for a QoS flow, such as QoS counted for a flow packet (data packet), which includes PDB of the LCH, and the PDB is configured to measure delay information of data packets waiting for scheduling in a corresponding bearer. In fact, performance of many applications depends on applications, frame, ADU or other levels. At present, implementation and guarantee methods for service and transmission requirements of the application layer or ADU layer or frames are absent. New QoS requirements are generated in R18 3GPP service transmission. Under this premise, it is insufficient to have only transmission guarantee or QoS for data packets. For example, even though a transmission process of a data packet meets QoS requirements, transmission of ADU or frame corresponding to the data packet may not be guaranteed. In this case, it needs to consider providing QoS guarantee for transmission requirements of "ADU", "frame" or other levels.

The technical solutions of the disclosure will be introduced below through several exemplary embodiments.

With reference to FIG. 4, FIG. 4 illustrates a flowchart of a method of data transmission according to an embodiment of the disclosure. The method may be applied to the network architecture shown in FIG. 1, and an execution body of the method may be a terminal device or an access network device. The terminal device is taken as an example in the following embodiments, and processes of the access network device implementing the method is the same as or similar to those of the terminal device. The method may include the following operations (410 and 420).

At operation 410, a first object to which a to-be-transmitted packet belongs is determined, the first object including one of an application, a data flow, a QoS flow, an ADU, a frame, a coded slice, or a unit set.

The to-be-transmitted packet refers to a packet waiting for transmission (or needs to be transmitted) and may be a data packet, and contents of the to-be-transmitted packet may be user data generated by an application layer of the terminal device, or core network data received by the access network device, or other data, which are not limited in the disclosure. Arrival of the packet may be periodic or pseudo-periodic. An arrival time of a periodic packet is a fixed time point; and an arrival time of a pseudo-periodic packet is any time point within a time range.

The terminal device determines the first object to which the to-be-transmitted packet belongs according to some characteristics of the to-be-transmitted packet, reference to a specific determination method of which may be made to introductions below.

A type of the first object may be any one of an application, a data flow, a QoS flow, an ADU, a frame, a coded slice, or a unit set.

The data flow is a piece of ordered bit set with a starting point and an ending point.

The application is a set of multiple data flows. For example, a video playback application on the terminal device includes image data flows, audio data flows, subtitle data flows, etc.

The ADU is data obtained after adding an additional address and error checking to a specific network, based on the PDU.

The frame is data packaged by the data link layer, and may be considered as a piece of bitstream in a transmission process of the data link layer.

The coded slice is a smaller data slice obtained by dividing the frame or the ADU. For example, an image data may be transmitted through a frame, or may be divided into multiple coded slices through coding, and transmitted in form of coded slices.

The unit set is a set composed of several data units. The data unit may be the ADU or the frame or the coded slice, or may be a data slice with a smaller volume of data obtained after dividing the coded slice. Size of the data unit is not limited here.

The QoS flow is a granularity of QoS control.

At operation 420, the to-be-transmitted packet is transmitted based on transmission requirements and/or QoS parameters for the first object.

Optionally, the transmission requirements and/or the QoS parameters include at least one of a cycle for the first object, a data arrival time for the first object, a data arrival time interval for the first object, a data arrival time period for the first object, a data arrival start time for the first object, a data arrival end time for the first object, a data arrival offset for the first object, a packet error rate for the first object, a packet delay budget for the first object, or a packet size for the first object.

The transmission requirements include a bit error rate, an error checking rate, a block error rate, a transmission delay or the like during transmission. Optionally, the transmission requirements are configured by the core network.

The QoS parameters may affect scheduling algorithms and decisions of the access network device for different levels of users and services. Optionally, the QoS parameters are configured by the core network.

Optionally, the "arrival time" in the above transmission requirements and/or QoS parameters is a time when the packet arrives at an AS from the application layer.

The cycle for the first object refers to an interval time between two adjacent first objects. Here, the interval time is a fixed and unchanged value.

The data arrival time for the first object refers to a time point at which all of packets belonging to the same first object arrive.

The data arrival time interval for the first object refers to a time interval between two adjacent first objects. Optionally, time intervals between arrival times for the first objects are not equal.

The data arrival time period for the first object refers to a time period during which all of packets belonging to the first object arrive. Optionally, the time period is a length of a period of time and cannot indicate a specific moment. For example, it is determined that the data arrival time period for the first object is 10 ms in a transmission requirement and/or a QoS parameter. Optionally, the time period is a time period between two specific moments. For example, it is determined that the data arrival time period for the first object is 68 ms to 78 ms in a transmission requirement and/or a QoS parameter.

The data arrival start time for the first object refers to a time at which a first packet belonging to a certain first object arrives.

The data arrival end time for the first object refers to a time at which a last packet belonging to a certain first object arrives.

The data arrival offset for the first object refers to a time offset deviated based on a certain time point. A packet with a pseudo-period may jitter during transmission. Such packet may not arrive at a definite time point, but may arrive within a time range that is obtained after deviating from a definite time point. The data arrival offset for the first object is configured to determine a time delay due to jitter.

The packet error rate for the first object refers to a ratio of error or loss that is allowed for the packet(s) of the first object. For example, the first object has X packets, where there are Y packet(s) that occurs error during transmission, and the packet error rate for the first object is X÷Y.

The packet delay budget for the first object defines an upper time limit up to which packet(s) of the first object may delay. For example, the packet delay budget for the first object is 100 ms, representing that the packet(s) is allowed to arrive by delaying within 100 ms.

The packet size for the first object means that packets belonging to the same first object have the same data volume range, and the terminal device may obtain the packet size according to header information of an arriving packet and determine the first object to which the packet belongs. For example, 2 bytes are used in a header of an IP packet to indicate size of the packet.

In an exemplary embodiment, the terminal device determines the first object to which the arriving packet belongs, and according to transmission requirements and/or QoS parameters obtained from the core network. The obtained transmission requirements and/or QoS parameters include the data arrival time period for the first object, which indicates a specific time period during which packets belonging to a certain first object A arrive. The terminal device determines all of the packets arriving within the time period as packets of the first object A.

Optionally, the transmission requirements and/or the QoS parameters are provided for a single QoS flow; or, the transmission requirements and/or the QoS parameters are provided for multiple QoS flows. The core network may configure a transmission requirement and/or QoS parameter for each QoS flow, or may configure the same transmission requirement and/or QoS parameter for multiple QoS flows.

Optionally, the transmission requirements and/or the QoS parameters are sent to the access network device or the terminal device together with Time Sensitive Communication Auxiliary Information (TSCAI) and/or other QoS parameters. The other QoS parameters include at least one of 5QI, ARP, or a bit rate. Reference to detailed contents of the QoS parameters may be made to the above introduction of related technologies. Optionally, the other QoS parameters may be provided for the first object or for the QoS flow.

The terminal device receives the transmission requirements and/or QoS parameters sent by the core network and the TSCAI and/or other QoS parameters, and determines which first object the packet belongs to according to the above parameters.

In the invention, the transmission requirements and/or the QoS parameters are sent to the access network device by a core network device, and the core network device includes one of PCF, SMF, or UPF. Reference to relevant contents of the PCF, SMF and UPF may be made to the above introduction of relevant background.

In summary, according to the technical solution provided in the embodiment, before sending a to-be-transmitted packet, a first object to which the to-be-transmitted packet belongs is determined, and the packet is transmitted according to transmission requirements and/or QoS parameters for the first object. By providing parameter information of QoS for the application, the data flow, the QoS flow, the ADU, the frame, the coded slice, the unit set or other levels, QoS guarantee for an application, a data flow, a QoS flow, an ADU, a frame, a coded slice and a unit set are achieved, thereby meeting reliability and delay requirements of the above object during data transmission.

A method for determining the first object to which the packet belongs is introduced below.

With reference to FIG. 5, FIG. 5 illustrates a flowchart of a method of data transmission according to another embodiment of the disclosure. The method includes the following operations (510 and 520).

At operation 510, a first object to which a to-be-transmitted packet belongs is determined according to an identifier for the packet or an arrival time of the packet or a type of the packet, the first object including one of an application, a data flow, a QoS flow, an ADU, a frame, a coded slice, or a unit set.

At operation 520, the packet is transmitted based on QoS parameters for the first object.

In an embodiment, the operation of determining the first object to which the packet belongs includes the following operations. The first object to which the packet belongs is determined according to an identifier for the packet, and packets belonging to the same first object have the same identifier. The type of the identifier for the packet is related to the first object to which the packet belongs. Optionally, the identifier for the packet is an application identifier, a data flow identifier, a QoS flow identifier, an ADU number, a frame number (or a serial number (SN) of a frame), a coded slice number, or a unit set number, etc. For example, at a certain moment, there are 3 to-be-transmitted packets in an AS of the terminal device, and these to-be-transmitted data packets are IP data packets. Assuming that SN of a frame carried by IP data packet 1 is 1, SN of a frame carried by IP data packet 2 is 1, and SN of a frame carried by IP data packet 3 is 2, then the terminal device determines that the IP data packet 1 and the IP data packet 2 belong to the same first object according to SN of the frames.

In the invention, the identifier is carried in the packet; or, the identifier is located outside the packet and sent together with the packet. Optionally, in a downlink process of the access network device, identifiers for packets arriving at an AS of the access network device are added or sent by UPF or SMF of the core network device, and the access network device may also add and/or send identifiers to packets received by the application layer. Optionally, in an uplink process of the terminal device, identifiers for packets arriving at an AS of the terminal device are added by the PDCP layer or the SDAP layer. Optionally, the identifier is carried in a header of the packet. Optionally, the identifier for the packet is carried in payload of the packet, and the payload of the packet is a part of the packet that contains actual information. Optionally, the identifier for the packet may not be carried in the packet. For example, the terminal device sends packets to the access network device, while sends identifiers for the packets to the access network device.

In an example, a to-be-transmitted packet arrives at the AS, its identifier is an ADU number with a value of 1, the ADU number is added by the PDCP layer to payload of the to-be-transmitted packet, and the AS determines that the to-be-transmitted packet belongs to an ADU whose ADU number is 1 according to the identifier information.

In another example, a to-be-transmitted packet arrives at the AS, its identifier is an ADU number with a value of 1, the ADU number is added by the SDAP layer to a header of the to-be-transmitted packet, and the AS determines that the to-be-transmitted packet belongs to an ADU whose ADU number is 1 according to the identifier information.

In the embodiment, the terminal device or the access network device may determine the first object to which the packet belongs according to the identifier for the packet only. In this way, the determination process is convenient and consumes short time.

In an exemplary embodiment, the operation of determining the first object to which the packet belongs includes the following operations. The first object to which the packet belongs is determined according to an arrival time of the packet, and the packets arrive according to a period or a pseudo-period. Optionally, the arrival time represents a moment when the packet arrives at the AS from the application layer.

Optionally, packets whose arrival times are within the same time period belong to the same first object; or, packets within a data arrival time period for the first object belong to the same first object; or, packets in a range from a data arrival start time for the first object to a data arrival end time for the first object belong to the same first object.

Optionally, when the AS of the terminal device determines relationships between the packets and the first object, three ideas are provided as follows. The AS of the terminal device determines: 1. the packets belonging to a certain first object through their arrival times, where all of the packets arriving within a period of time belong to the same first object; 2. an arrival time of a packet to determine the first object to which the packet belongs; 3. the first arriving packet and the last arriving packet of a certain first object to determine all of the packets arriving between arrival times of the two packets as the packets of the first object.

Optionally, the same time period is determined by a cycle for the first object and a data arrival time for the first object;
Or, the same time period is determined by the cycle for the first object, the data arrival time for the first object and a data arrival offset for the first object;
Or, the same time period is determined by a data arrival time interval for the first object and the data arrival time for the first object;
Or, the same time period is determined by the data arrival time interval for the first object, the data arrival time for the first object and the data arrival offset for the first object;
Or, the same time period is determined by a data arrival time period for the first object;
Or, the same time period is determined by the data arrival time period for the first object and the data arrival offset for the first object;
Or, the same time period is determined by a data arrival start time for the first object and a data arrival end time for the first object;
Or, the same time period is determined by the data arrival start time for the first object, the data arrival end time for the first object and the data arrival offset for the first object.

Optionally, the arrival time for the first object is a specific moment when the packet of the first object arrives.

Optionally, the data arrival time period for the first object is a time interval indicating a period of time or is a fixed time period determined by two endpoint moments. In case that the data arrival time period for the first object is the time interval indicating the period of time, the same time period may also be determined by the data arrival time period for the first object and the data arrival start time for the first object; or, the same time period may also be determined by the data arrival time period for the first object, the data arrival start time for the first object and the data arrival offset for the first object; or, the same time period may also be determined by the data arrival time period for the first object and the data arrival end time for the first object; or, the same time period may also be determined by the data arrival time period for the first object, the data arrival end time for the first object and the data arrival offset for the first object.

Exemplarily, the terminal device determines the same time period according to the cycle for the first object, the data arrival time for the first object and the data arrival offset for the first object. The cycle for the first object is 30 ms, the data arrival time for the first object is 10 ms, 15 ms, 40 ms, 55 ms..., and the data arrival offset for the first object is 5 ms. An arrival time range of data for the first object after offset is 10 ms to 15 ms, 15 ms to 20 ms, 40 ms to 45 ms, and 55 ms to 60 ms. The AS of the terminal device determines packets which may arrive within 30 ms as packets belonging to the first object 1, determines packets which may arrive within a range from 30 ms to 60 ms as packets belonging to the first object 2, and so on. The AS of the terminal device determines all of the packets arriving within a period of time as belonging to the same first object.

Exemplarily, the terminal device determines the same time period according to the data arrival time interval for the first object and the data arrival time for the first object. The data arrival time interval is an ordered list, and each unit in the list has equal value or different values. The arrival time interval for the first object is [20, 10, 20, ...] ms, and the data arrival time for the first object is 10 ms, 12 ms, 22 ms, 36 ms, 40 ms.... The AS of the terminal device determines packets arriving at 10 ms and 12 ms as packets of the first object 1, determines a packet(s) arriving at 22 ms as a packet(s) of the first object 2, determines packets arriving at 36 ms and 40 ms as packets of the first object 3, and so on. The terminal device determines a first object to which a packet(s) belongs according to arrival time(s) of the packet(s).

Exemplarily, if a data arrival start time for a certain first object is 174 ms, a data arrival end time for the first object is 274 ms, and a data arrival offset for the first object is 10 ms, then a data arrival end time for the first object after offset is 284 ms at the latest. The terminal device determines first data arriving within a range from 174 ms to 284 ms as packets of the first object.

In an exemplary embodiment, the operation of determining the first object to which the packet belongs includes the following operations. The first object to which the packet belongs is determined according to a type of the packet. The packets sequentially arrive at an AS from an application layer.

Optionally, starting from a first timestamp, a first number of packets with a first type belong to the same first object; or, packets that arrive between a second timestamp and a third timestamp belong to the same first object. The second timestamp is an arrival time of a first specific packet, the third timestamp is an arrival time of a second specific packet, the first specific packet and the second specific packet are determined based on the types of packets.

Optionally, the above first timestamp is a set fixed moment, and the AS of the terminal device starts counting types of arriving packets from the fixed moment. Optionally, the above first timestamp is an arrival time of a specified type of packet, and the AS of the terminal device receives a certain packet and determines that the packet is the specified type of packet, and then starts counting the types of the arriving packets. Optionally, the first timestamp is specified by the core network device.

The packets with the first type may be the same type of packets or multiple types of packets.

Optionally, the number of digits in the first number corresponds to types of the packets with the first type; or, the number of digits in the first number does not correspond to types of the packets with the first type.

Exemplarily, it is specified for a certain first object that the first timestamp is a fixed moment, the first timestamp is 144 ms, the first number is 16 and 32, and the first type is composed of I packet and P packet. The AS of the terminal device starts counting the number and types of arriving packets from 114 ms, and determines the first 16 I packets H and 32 P packets arriving within 114 ms as the packets belonging to the first object.

Exemplarily, it is specified for a certain first object that each of the first specific packet and the second specific packet is composed of a pose packet and a video packet. A timestamp at which a first pose packet and a first video packet arrive at the AS of the terminal device is 256 ms, and the AS of the terminal device starts counting arriving packets from 256 ms; a timestamp at which another pose packet and another video packet arrive at the AS is 324 ms, and the AS of the terminal device stops counting arriving packets at 324 ms. Packets arriving at the AS of the terminal device between 256 ms and 324 ms belong to the first object.

The above embodiments introduce a method for determining the first object to which the to-be-transmitted packets belong by the terminal device or the access network device. In some other embodiments, the method further includes the following operations when the method is executed by the terminal device. The terminal device sends association information between the first object and the packet to the access network device, where the association information is used for the access network device to perform at least one of uplink transmission scheduling, resource allocation, or QoS guarantee.

Optionally, the association information includes a mapping relationship between the first object and the packet, a type of the first object and a type of the packet. Optionally, the association information includes the number of packets belonging to the first object.

The terminal device sends the association information between the first object and the packets to the access network device, so that the access network device can know well situations of the to-be-transmitted packets belonging to the first object in the terminal device, which is beneficial for the access network device to perform reasonable resource allocation.

It should be noted that in the above exemplary embodiments, descriptions of forms of reference information such as the ADU number, the cycle for the first object, the data arrival time for the first object, the data arrival offset for the first object, the types of the packets, or other forms are only used as an example, and do not indicate limitations to forms and contents of the above information.

In summary, in the embodiment, the first object to which the packet belongs is determined by the identifier for the packet, the data arrival time and the type of the packet. In this way, the determination process is simple and uses a few additional information, thereby preventing the process of determining the first object to which the to-be-transmitted packet belongs from occupying too much time and space.

Another technical solution of the disclosure will be introduced below through several exemplary embodiments.

With reference to FIG. 6, FIG. 6 illustrates a flowchart of a method of data transmission according to another embodiment of the disclosure. The method may be applied to the network architecture shown in FIG. 1, and an execution body of the method may be a terminal device or an access network device. The execution body takes the terminal device as an example in the following embodiments, and processes of the access network device implementing the method is the same as or similar to those of the terminal device. The method may include the following operation 610.

At operation 610, in a first situation, transmission processing is performed on a packet belonging to a first object by using a transmission processing mechanism corresponding to the first situation, the first object including one of an application, a data flow, a QoS flow, an ADU, a frame, a coded slice, or a unit set.

Reference to relevant contents of the application, the data flow, the QoS flow, the ADU, the frame, the coded slice and the unit set may be made to the embodiments corresponding to the previous set of technical solutions of the disclosure.

The first situation is a situation which may occur to the terminal device during transmission of the packet belonging to the first object.

Optionally, the packet belonging to the first object refers to all packets of the first object, or an untransmitted packet of the first object, an unsuccessfully transmitted packet of the first object, or a packet of the first object for which ACK is not received, or a packet which has not been grouped or multiplexed by an AS, or a packet which has not been transmitted by the AS, or a packet which has not been transmitted by a PDCP layer, or packets which has not been transmitted by a RLC layer, or a packet which has not been transmitted by a MAC layer, or a packet which has not been transmitted by a physical layer, or a packet which has not been deleted. The packet of the first object for which ACK is not received, refers to a packet which has been transmitted but for which successful reception has not been fed back by the receiving device; the packet which has not been deleted refers to a packet for which time expiration deletion is triggered due to expiration of its transmission time. Untransmitted packets at the AS, the PDCP layer, the RLC layer, the MAC layer or other layers may be collectively referred to as untransmitted packets in the bottom layer of the terminal device.

The terminal device sends the above processing information to the core network device, which helps the core network device to configure resources or adjust QoS transmission parameters for the terminal device according to an actual situation of a data transmission process of the terminal device.

In an exemplary embodiment, the terminal device transmits packets belonging to a video data flow, and when the terminal device determines that the video data flow belongs to the first situation, the terminal device performs transmission processing on untransmitted packets belonging to the video data flow by using a transmission processing mechanism corresponding to the first situation.

In summary, according to the technical solution provided in the embodiment, the terminal device determines packets of the first object meeting the first situation, and performs transmission processing by using a transmission processing mechanism corresponding to the first situation. In this way, QoS guarantee for an application, a data flow, a QoS flow, an ADU, a frame, a coded slice and a unit set are achieved, different transmission processing methods are provided for transmission of the first object, so that the transmission process is more flexible and controllable.

The above embodiment introduces that in the first situation, the terminal device or the access network device performs transmission processing on the packet belonging to the first object by using the transmission processing mechanism corresponding to the first situation. In some other embodiments, different first situations correspond to different processing mechanisms, for which introduction is made thereto by providing two embodiments below with reference to FIG. 6, FIG. 7 and FIG. 8.

At operation 610, in a first situation, transmission processing is performed on a packet belonging to a first object by using a transmission processing mechanism corresponding to the first situation, the first object including one of an application, a data flow, a QoS flow, an ADU, a frame, a coded slice, or a unit set.

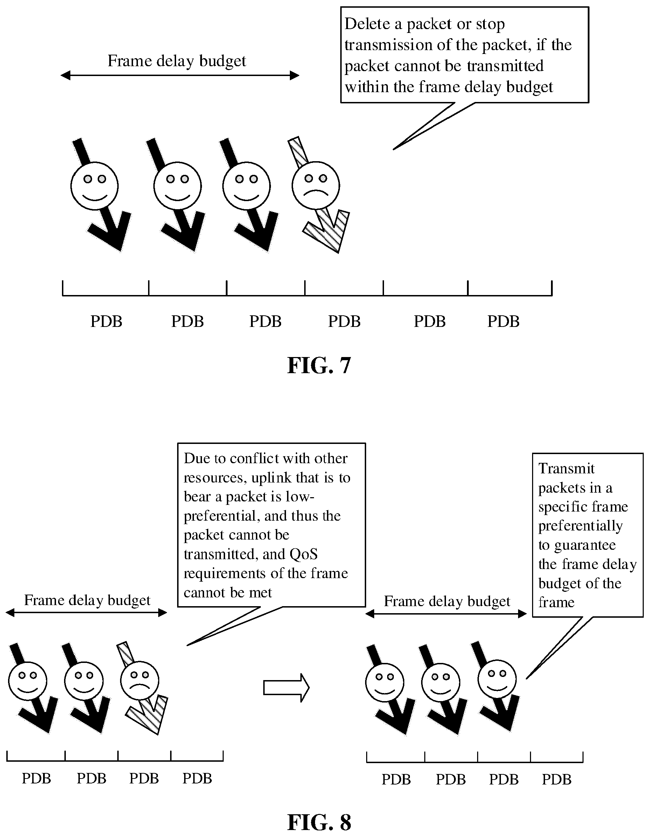

With reference to FIG. 7, FIG. 7 illustrates a schematic diagram of a data low-preferential transmission processing method.

In an embodiment, the first situation includes at least one of:
requirements corresponding to the first object being met or exceeded;
existence of an untransmitted packet, or existence of an unsuccessfully transmitted packets, or existence of a packet for which ACK is not received;
non-existence of a transmitted packet, or non-existence of a successfully transmitted packet, or non-existence of a packet for which ACK is received;
existence of a packet which is unable to be transmitted or successfully transmitted within the QoS requirements corresponding to the first object;
a number of transmitted or successfully transmitted packets belonging to the first object being less than or equal to a first threshold; or
a number of untransmitted or unsuccessfully transmitted packets belonging to the first object being equal to or greater than a second threshold.

The operation of performing the transmission processing on the packet belonging to the first object by using the transmission processing mechanism corresponding to the first situation includes the following operations.

All packets of the first object are deleted, or transmission of the packet belonging to the first object is stopped, or the packet belonging to the first object is low-preferentially processed.

"low-preferentially processing" means that the terminal device uses a passive sending or not sending method for the packet(s) meeting the first situation and corresponding to the first object during data transmission. Specific means of the low-preferentially processing will be introduced in detail below.

QoS requirements corresponding to the first object being met or exceeded means that the first object meets or exceeds QoS requirements configured by the core network device during transmission. Optionally, the QoS requirements corresponding to the first object refer to delay budget of a corresponding frame. In case that untransmitted packets, or unsuccessfully transmitted packets, or packets for which ACK is not received are present during transmission of the packets of the first object, it means that not all the packets belonging to the first object are successfully transmitted. During transmission, when transmitted packets, or successfully transmitted packets, or packets for which ACK is not received are not present for a certain first object, it means that the first object has not started been transmitted. A situation where packets which are unable to be transmitted or successfully transmitted within the QoS requirements corresponding to the first object are present, means that when not all the packets belonging to the first object are transmitted, some counting results of transmitted packets have exceeded corresponding values in the QoS requirements, and the QoS requirements cannot be met even with continuous transmission of the packets of the first object. Optionally, the QoS parameters for the first object include a packet error rate. Optionally, the first threshold and the second threshold are determined by the core network device. The number of transmitted or successfully transmitted packets belonging to the first object being less than or equal to the first threshold, and the number of untransmitted or unsuccessfully transmitted packets belonging to the first object being equal to or greater than the second threshold, mean that errors occur to a large number of packets of a certain first object during transmission. Too many errors occur to the transmitted packets belonging to the first object during transmission, so that the first object cannot reach the first threshold or has exceeded the second threshold, and continuous transmission of the packets of the first object cannot allow the first threshold or the second threshold to be met. At this time, continuous transmission of the packets belonging to the first object is meaningless. In an example, the first threshold for a certain first object is 20, and the first object includes 30 packets in total. At a certain moment A, the first object has transmitted 25 packets, of which transmission of 11 packets fails and transmission of 14 packets is successful. Assuming that all the remaining 5 untransmitted packets belonging to the first object are successfully transmitted, at most 19 packets of the first object are successfully transmitted, which is less than the first threshold of 20. Therefore, at the moment A, the maximum number of successfully transmitted packets of the first object is less than the first threshold, and thus the untransmitted packets belonging to the first object are unnecessary for transmission.

Optionally, the low-preferentially processing includes one of:
low-preferentially selecting a HARQ process which corresponds to a packet meeting the first situation and corresponding to the first object during selection of HARQ process;
considering a HARQ process or authorization which is multiplexed or about to be multiplexed for the packet meeting the first situation and corresponding to the first object, as a low-preferential resource;
deactivating duplicate transmission or repeated transmission, or reducing a number of transmissions, for the packet meeting the first situation and corresponding to the first object;
performing processing based on transmission parameters of a first physical layer or modifying the transmission parameters of the physical layer, for the packet meeting the first situation and corresponding to the first object; or
performing processing based on transmission parameters of a first layer 2 (L2) or modifying parameters corresponding to LCH, for the packet meeting the first situation and corresponding to the first object.

Low-preferentially selecting the HARQ process which corresponds to the packet meeting the first situation and corresponding to the first object, means that the HARQ process is selected low-preferentially or later when selecting the HARQ process. For example, when the terminal device selects a HARQ process used for a transmission resource (such as CG), or when after packet transmission fails, the MAC layer may perform HARQ retransmission on the packets whose transmission fails, in case that a packet corresponding to the first object while not meeting the first situation is requested to perform the HARQ process, the terminal device will preferentially select a HARQ process corresponding to other packets and will not preferentially select the HARQ process which corresponds to the packets meeting the first situation and corresponding to the first object. Reference to detailed contents of HARQ may be made to the above introduction of technical background.

Considering the HARQ process or authorization which is multiplexed or about to be multiplexed for packet meeting the first situation and corresponding to the first object, as a low-preferential resource means that the terminal device preferentially selects a HARQ process or authorization for packets which do not meet the first situation and correspond to the first object, in case of resource conflict. For example, the terminal device may not preferentially process or transmit the HARQ process or authorization which is multiplexed or about to be multiplexed for the packets meeting the first situation and corresponding to the first object; or, the terminal device sets the HARQ process or authorization which is multiplexed or about to be multiplexed for the packet meeting the first situation and corresponding to the first object, to have a low priority. Multiplexing of the HARQ process means that data of at least one LCH is transmitted on a HARQ process. Or, multiplexing of the HARQ process means that multiple TBs may be processed in a HARQ process in case of time-division multiplexing. When one or more TBs are contained in a multiplexed HARQ process, and the one or more TBs are configured to transmit the packets belonging to the first object and meeting the first situation, the terminal device may reduce priority of the multiplexed HARQ process, which means that priorities of packets transmitted through all the TBs in the multiplexed HARQ process are reduced.

Deactivating duplicate transmission or repeated transmission, or reducing a number of transmissions, for the packet meeting the first situation and corresponding to the first object means that for the packets meeting the first situation and corresponding to the first object, the terminal device does not tend to perform data transmission by using activation transmission or deactivation transmission, or reduce the number of transmissions of these packets, so as to prevent these packets from occupying too many RLC entities and channel resources. The above repeated transmission refers to a method of data transmission in which the same packet is transmitted by using time-frequency resources of multiple physical layers to improve transmission reliability and/or reduce delay. Optionally, a sending side device transmits the same packet by using more than one RLC entities simultaneously during the duplicate transmission, to improve transmission reliability and/or reduce delay.

Processing the packet meeting the first situation and corresponding to the first object based on transmission parameters of the first physical layer, or modifying the transmission parameters of the physical layer means that the terminal device processes or modifies the transmission parameters of the first physical layer so that the packets meeting the first situation and corresponding to the first object are transmitted through low reliability or high delay physical layer parameters or configurations, such as by adopting a low Modulation and Coding Scheme (MCS).

Processing the packet meeting the first situation and corresponding to the first object based on transmission parameters of the first layer 2, or modifying parameters corresponding to LCH means that the terminal device modifies the transmission parameters of the first layer 2 which corresponds to the packets meeting the first situation and corresponding to the first object, or modifies the parameters corresponding to LCH, wherein layer 2 is a data link layer. Reference to relevant parameters of the data link layer may be made to introduction of background technologies corresponding to FIG. 3. Optionally, the LCH parameters include a LCH priority parameter, a Physical Resource Block (PRB), and a token bucket size. By processing the parameters in the data link layer or modifying the LCH parameters by the terminal device, priority of transmission of the packets meeting the first situation and corresponding to the first object in the data link layer can be reduced, and other data packets which does not meet the first situation and correspond to the first object are transmitted preferentially.

Optionally, low-preferentially processing further includes deleting the packet meeting the first situation and corresponding to the first object. For example, the packet(s) meeting the first situation and corresponding to the first object is deleted before a PDCP discard timer expires.

Optionally, processing information for the packet belonging to the first object is counted and/or reported, and the processing information includes at least one of a processing situation, a number of processing, or a processing ratio. The terminal device reports the processing information to the core network. Optionally, the processing situation includes a situation where the packets belonging to the first object are not transmitted, or the packets are transmitted but the transmission of the packets is not confirmed as successful, or transmission of the packets is completed. Optionally, the number of processing is the number of low-preferential processing of the packets meeting the first situation and corresponding to the first object. Optionally, the processing ratio is a ratio of low-preferentially processed packets belonging to the first object to not low-preferentially processed packets belonging to the first object. Optionally, counting and/or reporting may be performed periodically or triggered by an event(s).

In another exemplary embodiment, transmission requirements and/or QoS parameters of a certain first object include a packet error rate of 10%. The first object includes 50 packets. At a certain moment, the terminal device counts that errors occur to ten of the transmitted packets of the first object, and the packet error rate at this time is 20%. Packets which cannot meet the transmission requirements and/or the QoS parameters are present in the first object, and the first object belongs to the first situation. The terminal device low-preferentially processes untransmitted packets belonging to the first object. A specific low-preferential process is to low-preferentially select the HARQ process which corresponds to the packet meeting the first situation and corresponding to the first object.

The terminal device low-preferentially processes the packets meeting the first situation and corresponding to the first object, which avoids occupation of transmission resources due to continuous transmission of the packets belonging to the first object when the first object does not meet the QoS parameters, and the released transmission resources may be used for transmission of packets belonging to other first objects, which guarantees QoS requirements of other first objects.

With reference to FIG. 8, FIG. 8 illustrates a schematic diagram of a data high-preferential transmission processing method.

Optionally, the first situation includes at least one of:
QoS requirements corresponding to the first object being about to be met or exceeded;
existence of an untransmitted packet, or existence of an unsuccessfully transmitted packet, or existence of a packet for which ACK is not received;
existence of a transmitted packet, or existence of a successfully transmitted packets, or existence of a packet for which ACK is received;
a number of transmitted or successfully transmitted packets being equal to or greater than a third threshold;
a number of untransmitted or unsuccessfully transmitted packets belonging to the first object being less than or equal to a second threshold;
a number of transmitted or successfully transmitted packets belonging to the first object being less than or equal to a first threshold; or
a number of transmitted or successfully transmitted packets belonging to the first object being greater than the first threshold.

The operation of performing the transmission processing on the packet belonging to the first object by using the transmission processing mechanism corresponding to the first situation includes that the packet belonging to the first object are high-preferentially processed.

Optionally, preferentially selecting a HARQ process which corresponds to a packet meeting the first situation and corresponding to the first object during selection of HARQ process;
considering a HARQ process or authorization which is multiplexed or about to be multiplexed for the packet meeting the first situation and corresponding to the first object, as a high-preferential resource;
activating duplicate transmission or repeated transmission, or increasing a number of transmissions, for the packet meeting the first situation and corresponding to the first object;
processing the packet meeting the first situation and corresponding to the first object based on transmission parameters of a second physical layer, or modifying the transmission parameters of the physical layer; or
processing the packet meeting the first situation and corresponding to the first object based on transmission parameters of a second layer 2, or modifying parameters corresponding to LCH.

High-preferentially selecting the HARQ process which corresponds to the packet meeting the first situation and corresponding to the first object, means that the HARQ process is selected high-preferentially or first when selecting the HARQ process, so as to improve successful transmission rates of unsuccessfully transmitted packets.

For example, when the terminal device selects a HARQ process used for a transmission resource (such as CG), or when after packet transmission fails, the MAC layer may perform HARQ retransmission on the packets whose transmission fails, in case that a packet meeting the first situation and corresponding to the first object is requested to perform the HARQ process, the terminal device will preferentially select a HARQ process corresponding to the packet and will low-preferentially select the HARQ process which corresponds to the packets of the first object while not meeting the first situation.

Considering the HARQ process or authorization which is multiplexed or about to be multiplexed for the packet meeting the first situation and corresponding to the first object, as a high-preferential resource means that the terminal device preferentially selects a HARQ process or authorization for the packet meeting the first situation and corresponding to the first object, in case of resource conflict. For example, the terminal device may preferentially process or transmit the HARQ process or authorization which is multiplexed or about to be multiplexed for the packet meeting the first situation and corresponding to the first object; or, the terminal device sets the HARQ process or authorization which is multiplexed or about to be multiplexed for the packet meeting the first situation and corresponding to the first object, to have a high priority. Reference to relevant contents of multiplexing of the HARQ process may be made to introduction in the previous exemplary embodiment. When one or more TBs are contained in a multiplexed HARQ process and there is a TB or some TBs configured to transmit the packets belonging to the first object and meeting the first situation, the terminal device may increase priority of the multiplexed HARQ process, which means that priorities of packets transmitted through all the TBs in the multiplexed HARQ process are increased.

Activating duplicate transmission or repeated transmission, or increasing a number of transmissions, for the packet meeting the first situation and corresponding to the first object means that for the first object whose packet error rate or other parameters are about to meet the QoS requirements, the number of transmissions of the packets belonging to the first object by activating duplicate transmission, repeated transmission or other means, and the packet error rate of the first object is reduced, thereby preventing the packet error rate of the first object from reaching the packet error rate defined in the QoS requirements. Reference to relevant contents of the duplicate transmission may be made to introduction in the previous exemplary embodiment.

Performing processing based on transmission parameters of the first physical layer or modifying the transmission parameters of the physical layer, for the packet meeting the first situation and corresponding to the first object means that the terminal device processes or modifies the transmission parameters of the first physical layer so that the packet meeting the first situation and corresponding to the first object is transmitted through high reliability or low delay physical layer parameters or configurations, such as by adopting a high MCS.

Performing processing based on transmission parameters of the first layer 2 or modifying parameters corresponding to LCH, for the packet meeting the first situation and corresponding to the first object means that the terminal device modifies the transmission parameters of the first layer 2 which corresponds to the packet meeting the first situation and corresponding to the first object, or modifies the parameters corresponding to LCH, wherein the layer 2 is a data link layer. Reference to relevant parameters of the data link layer may be made to introduction of background technologies corresponding to FIG. 3. Optionally, the LCH parameters include a LCH priority parameter, a PRB, and a token bucket size. By processing the parameters in the data link layer or modifying the LCH parameters by the terminal device, priority of transmission of the packets meeting the first situation and corresponding to the first object in the data link layer can be increased, and these data packets meeting the first situation and corresponding to the first object are transmitted preferentially.

Optionally, processing information for the packet belonging to the first object is counted and/or reported, and the processing information includes at least one of a processing situation, a number of processing, or a processing ratio. The terminal device reports the processing information to the core network. Optionally, the processing situation includes a situation where the packet belonging to the first object is not transmitted, or the packet is transmitted but the transmission of the packet is not confirmed as successful, or transmission of the packet is completed. Optionally, the number of processing is the number of high-preferential processing of the packets meeting the first situation and corresponding to the first object. Optionally, the processing ratio is a ratio of high-preferentially processed packets belonging to the first object to not high-preferentially processed packets belonging to the first object. Optionally, counting and/or reporting may be performed periodically or triggered by an event(s).

In another exemplary embodiment, QoS parameters of a certain first object include a delay budget, and the delay budget is 100 ms. At a certain moment, transmission delay of a certain packet belonging to the first object has reached 90 ms, and there are still untransmitted packets in the first object, and then the terminal device determines that the first object meets the above first situation, and high-preferentially processes untransmitted packets belonging to the first object. A specific high-preferential process is to modify LCH priority parameters of the packets belonging to the first object, and transmit the packets belonging to the first object preferentially.

The terminal device high-preferentially processes the packet meeting the first situation and corresponding to the first object, which is beneficial to guarantee QoS requirements corresponding to the first object on the premise that the first object meets the transmission requirements and/or QoS parameter requirements. It should be noted that descriptions of reference information such as the delay budget, packet error rate or other information in the above exemplary embodiment are only used as an example, and do not indicate limitations to forms and contents of the above information.

Optionally, processing information for the packet belonging to the first object is counted and/or reported, and the processing information includes at least one of a processing situation, a number of processing, or a processing ratio. The terminal device reports the processing information to the core network. Optionally, the processing situation includes a situation where the packets belonging to the first object are not transmitted, or the packets are transmitted but the transmission of the packets is not confirmed as successful, or transmission of the packets is completed. Optionally, the number of processing includes the number of low-preferential processing of the packets corresponding to the first object and/or the number of high-preferential processing of the packets corresponding to the first object. Optionally, the processing ratio includes a ratio of low-preferentially processed packets belonging to the first object to not low-preferentially processed packets belonging to the first object, and/or a ratio of high-preferentially processed packets belonging to the first object to not high-preferentially processed packets belonging to the first object. Optionally, counting and/or reporting may be performed periodically or triggered by an event.

In summary, the embodiments of the present disclosure provide two specific first situations and corresponding transmission processing mechanisms, and achieves that high-preferential or low-preferential data transmission processing methods may be used for different transmission situations during data transmission, thereby achieving a flexible transmission effect while guaranteeing QoS requirements.

Apparatus embodiments of the disclosure are provided below, and may be configured to perform the method embodiments of the disclosure. Reference to details which are not disclosed in the apparatus embodiments of the disclosure may be made to the method embodiments of the disclosure.

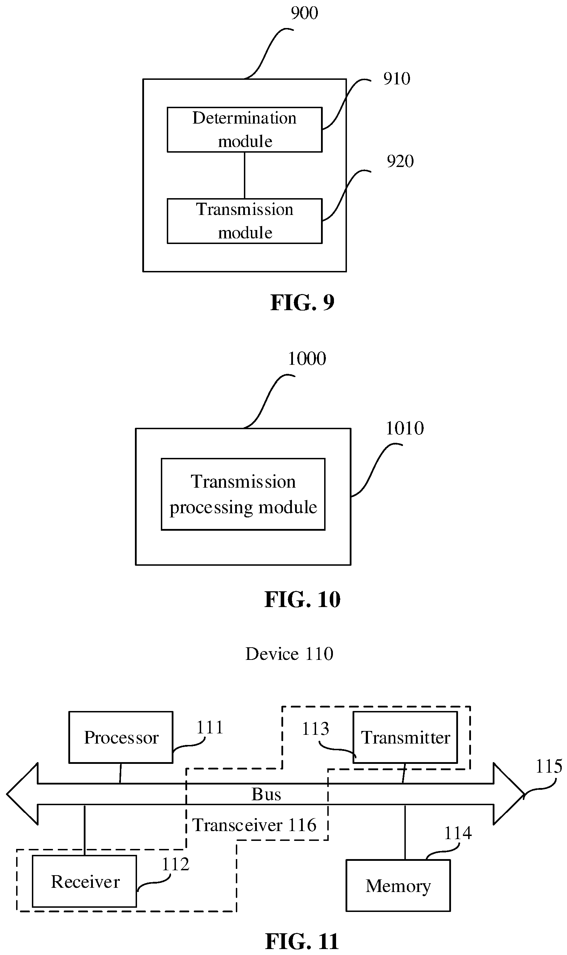

With reference to FIG. 9, FIG. 9 illustrates a block diagram of an apparatus of data transmission according to an embodiment of the disclosure. The apparatus has functions of implementing the above method examples on the terminal device side or the access network device side, and the functions may be implemented by hardware, or may be implemented by hardware executing corresponding software. The apparatus may be the terminal device or the access network device as introduced above, or may be arranged in the terminal device or the access network device. As shown in FIG. 9, the apparatus 900 includes a determination module 910 and a transmission module 920.

The determination module 910 is configured to determine a first object to which a to-be-transmitted packet belongs, the first object including one of an application, a data flow, a QoS flow, an ADU, a frame, a coded slice, or a unit set.

The transmission module 920 is configured to transmit the packet based on transmission requirements and/or QoS parameters for the first object.

Optionally, the transmission requirements and/or the QoS parameters include at least one of a cycle for the first object, a data arrival time for the first object, a data arrival time interval for the first object, a data arrival time period for the first object, a data arrival start time for the first object, a data arrival end time for the first object, a data arrival offset for the first object, a packet error rate for the first object, a packet delay budget for the first object, or a packet size for the first object.

Optionally, the transmission requirements and/or the QoS parameters are provided for a single QoS flow; or, the transmission requirements and/or the QoS parameters are provided for multiple QoS flows.

The determination module 910 is configured to determine the first object to which the packet belongs according to an identifier for the packet. Packets belonging to the same first object have the same identifier.

Optionally, the identifier is carried in the packet; or, the identifier is located outside the packet and sent together with the packet.

The determination module 910 is configured to determine the first object to which the packet belongs according to an arrival time of the packet. The packet arrives according to a period or a pseudo-period.

Optionally, packets whose arrival times are within the same time period belong to the same first object.

Or, packets within a data arrival time period for the first object belong to the same first object.

Or, packets in a range from a data arrival start time for the first object to a data arrival end time for the first object belong to the same first object.

Optionally, the same time period is determined by a cycle for the first object and a data arrival time for the first object.

Or, the same time period is determined by the cycle for the first object, the data arrival time for the first object and a data arrival offset for the first object;

Or, the same time period is determined by a data arrival time interval for the first object and the data arrival time for the first object.

Or, the same time period is determined by the data arrival time interval for the first object, the data arrival time for the first object and the data arrival offset for the first object.

Or, the same time period is determined by a data arrival time period for the first object.

Or, the same time period is determined by the data arrival time period for the first object and the data arrival offset for the first object.

Or, the same time period is determined by a data arrival start time for the first object and a data arrival end time for the first object.

Or, the same time period is determined by the data arrival start time for the first object, the data arrival end time for the first object and the data arrival offset for the first object.

The determination module 910 is configured to determine the first object to which the packet belongs according to a type of the packet. The packets sequentially arrive at an AS from an application layer.

Optionally, the apparatus 900 further includes an adding module (not shown in FIG. 9). The adding module is configured to add a label to the packet, and the label is configured to distinguish the first object to which the packet belongs.

Optionally, the transmission requirements and/or the QoS parameters are sent to the access network device or the terminal device together with TSCAI and/or other QoS parameters. The other QoS parameters include at least one of 5QI, ARP, or a bit rate.

The transmission module 920 is further configured to send association information between the first object and the packet to the access network device, and the association information is used for the access network device to perform at least one of uplink transmission scheduling, resource allocation, or QoS guarantee.

Optionally, the transmission requirements and/or the QoS parameters are sent to the access network device by a core network device, and the core network device includes one of PCF, SMF, or UPF.

In summary, according to the technical solution provided in the embodiment, the terminal device determines a first object to which a to-be-transmitted packet belongs before sending the to-be-transmitted packet, and transmits the packet according to transmission requirements and/or QoS parameters for the first object. By providing parameter information of the transmission requirements and/or QoS for the application, the data flow, the QoS flow, the ADU, the frame, the coded slice, the unit set or other levels, QoS guarantee for an application, a data flow, a QoS flow, an ADU, a frame, a coded slice and a unit set are achieved, thereby meeting reliability and delay requirements of the above object during data transmission.

With reference to FIG. 10, FIG. 10 illustrates a block diagram of an apparatus of data transmission according to an embodiment of the disclosure. The apparatus has functions of implementing the above method examples on the terminal device side or the access network device side, and the functions may be implemented by hardware, or may be implemented by hardware executing corresponding software. The apparatus may be the terminal device or the access network device as introduced above, or may be arranged in the terminal device or the access network device. As shown in FIG. 10, the apparatus 1000 may include a transmission processing module 1010.

The transmission processing module 1010 is configured to in a first situation, perform transmission processing on a packet belonging to a first object by using a transmission processing mechanism corresponding to the first situation. The first object includes one of an application, a data flow, a QoS flow, an ADU, a frame, a coded slice, or a unit set.

In an embodiment, the first situation includes at least one of:
QoS requirements corresponding to the first object being met or exceeded;
existence of an untransmitted packet, or existence of an unsuccessfully transmitted packets, or existence of a packet for which ACK is not received;
non-existence of a transmitted packets, or non-existence of a successfully transmitted packet, or non-existence of a packet for which ACK is received;
existence of a packet which is unable to be transmitted or successfully transmitted within the QoS requirements corresponding to the first object;
a number of transmitted or successfully transmitted packets belonging to the first object being less than or equal to a first threshold; or
a number of untransmitted or unsuccessfully transmitted packets belonging to the first object being equal to or greater than a second threshold.

The transmission processing module 1010 is configured to delete all packets of the first object, or stop transmission of the packets belonging to the first object, or low-preferentially process the packets belonging to the first object.

Optionally, the low-preferentially processing includes one of:
low-preferentially selecting a HARQ process which corresponds to a packet meeting the first situation and corresponding to the first object during selection of HARQ process;
considering a HARQ process or authorization which is multiplexed or about to be multiplexed for the packet meeting the first situation and corresponding to the first object, as a low-preferential resource;
deactivating duplicate transmission or repeated transmission, or reducing a number of transmissions, for the packet meeting the first situation and corresponding to the first object;
performing processing based on transmission parameters of a first physical layer or modifying the transmission parameters of the physical layer, for the packet meeting the first situation and corresponding to the first object; or
performing processing based on transmission parameters of a first layer 2 or modifying parameters corresponding to LCH, for the packet meeting the first situation and corresponding to the first object.

Optionally, the first situation includes at least one of:
QoS requirements corresponding to the first object being about to be met or exceeded;
existence of an untransmitted packet, or existence of an unsuccessfully transmitted packets, or existence of a packet for which ACK is not received;
existence of a transmitted packets, or existence of a successfully transmitted packet, or existence of a packet for which ACK is received;
a number of transmitted or successfully transmitted packets being equal to or greater than a third threshold;
a number of untransmitted or unsuccessfully transmitted packets belonging to the first object being less than or equal to a second threshold; or
a number of transmitted or successfully transmitted packets belonging to the first object being less than or equal to a first threshold.

The transmission processing module 1010 is configured to high-preferentially process the packet belonging to the first object.

Optionally, the high-preferentially processing includes one of:
preferentially selecting a HARQ process which corresponds to a packet meeting the first situation and corresponding to the first object during selection of HARQ process;
considering a HARQ process or authorization which is multiplexed or about to be multiplexed for the packet meeting the first situation and corresponding to the first object, as a high-preferential resource;
activating duplicate transmission or repeated transmission, or increasing a number of transmissions, for the packet meeting the first situation and corresponding to the first object;
performing processing based on transmission parameters of a second physical layer or modifying the transmission parameters of the physical layer, for the packet meeting the first situation and corresponding to the first object; or
performing processing based on transmission parameters of a second layer 2 or modifying parameters corresponding to LCH, for the packet meeting the first situation and corresponding to the first object.

Optionally, the packet belonging to the first object refers to all packets of the first object, or untransmitted packets of the first object, unsuccessfully transmitted packets of the first object, or packets of the first object for which ACK is not received, or packets which have not been grouped or multiplexed by an AS, or packets which have not been transmitted by the AS, or packets which have not been transmitted by a PDCP layer, or packets which have not been transmitted by a RLC layer, or packets which have not been transmitted by a MAC layer, or packets which have not been transmitted by a physical layer, or packets which have not been deleted.

Optionally, the apparatus further includes a counting and reporting module (not shown in FIG. 10). The counting and reporting module is configured to count and/or report processing information for the packet belonging to the first object. The processing information includes at least one of a processing situation, a number of processing, or a processing ratio.

In summary, according to the technical solution provided in the embodiment, the terminal device determines packets of the first object meeting the first situation, and performs transmission processing by using a corresponding transmission processing mechanism. In this way, QoS guarantee for an application, a data flow, a QoS flow, an ADU, a frame, a coded slice and a unit set are achieved, and different transmission processing methods are provided for transmission of the first object, so that the transmission process is more flexible and controllable.

It should be noted that when the apparatuses provided by the above embodiments implement their functions, division of the above functional modules is only used as an example for illustration. In an actual application, the above functions may be allocated to be completed by different functional modules according to actual requirements. That is, content structures of the device are divided into different functional modules to complete all or part of the above functions.

In the apparatuses provided by the above embodiments, specific manner in which each module executes operations has been described in detail in the embodiments related to the methods, and will not be described in detail here.

With reference to FIG. 11, FIG. 11 illustrates a structural block diagram of a device 110 according to a non-claimed embodiment of the disclosure. For example, the device 110 may be the terminal device in the above embodiments, and configured to perform the above method of data transmission on the terminal device side; the device 110 may also be the access network device in the above embodiments, and configured to perform the above method of data transmission on the access network device side. Specifically, the device 110 may include a processor 111, a receiver 112, a transmitter 113, a memory 114 and a bus 115.

The processor 111 includes one or more processing cores, and executes various functional applications and information processing by running software programs and modules.

The receiver 112 and the transmitter 113 may be implemented as a transceiver 116, and the transceiver 116 may be a communication chip.

The memory 114 is connected to the processor 111 through the bus 115.

The memory 114 may be configured to store a computer program, and the processor 111 is configured to execute the computer program to implement each of the operations in the above method embodiments performed by the device.

Furthermore, the memory 114 may be implemented by any type of volatile or non-volatile storage devices or a combination thereof, and the volatile or non-volatile storage devices include, but are not limited to, a Random-Access Memory (RAM), a Read-Only Memory (ROM), an Erasable Programmable Read-Only Memory (EPROM), an Electrically Erasable Programmable Read-Only Memory (EEPROM), a flash memory, or other solid state memory technologies, a Compact Disc Read-Only Memory (CD-ROM), a Digital Video Disc (DVD) or other optical storages, magnetic tape cartridges, magnetic tapes, magnetic disc storages or other magnetic storage devices.

In an exemplary embodiment, the processor 111 is configured to determine a first object to which a to-be-transmitted packet belongs. The first object includes one of an application, a data flow, a QoS flow, an ADU, a frame, a coded slice, or a unit set.

The transceiver 116 is configured to transmit the packet based on transmission requirements and/or QoS parameters for the first object.

In an exemplary embodiment, the transceiver 116 is configured to in a first situation, perform transmission processing on a packet belonging to a first object by using a transmission processing mechanism corresponding to the first situation. The first object includes one of an application, a data flow, a QoS flow, an ADU, a frame, a coded slice, or a unit set.

Details which are not described in detail in the above embodiments, may refer to introduction in the above method embodiments, and are not elaborated here.

An embodiment of the disclosure further provides a computer-readable storage medium, having stored thereon a computer program that, when executed by a processor of a terminal device or an access network device, causes to implement the above methods of data transmission.

Optionally, the computer-readable storage medium may include a ROM, a RAM, a Solid State Drive (SSD) or an optical disc, etc. The RAM may include a Resistance Random Access Memory (ReRAM) and a Dynamic Random Access Memory (DRAM).

An embodiment of the disclosure further provides a chip, which includes a programmable logic circuit and/or program instructions, and is configured to implement, when operating on a terminal device or an access network device, the above methods of data transmission.

An embodiment of the disclosure further provides a computer program product or computer program, which includes computer instructions stored in a computer-readable storage medium, wherein a processor of a terminal device or an access network device reads and executes the computer instructions from the computer-readable storage medium to implement the above methods of data transmission.

It should be understood that "indication" mentioned in the embodiments of the disclosure may be a direct indication, or may be an indirect indication, or may represent an association relationship. For example, A indicates B, which may represent that A indicates B directly, for example, B may be obtained by A; or may represent that A indicates B indirectly, for example, A indicates C, and B may be obtained by C; or may represent that there is an association relationship between A and B.

In the descriptions of the embodiments of the disclosure, the term "correspond" may represent that there are direct correspondences or indirect correspondences between two items, or may represent that there is an association relationship between the two items, or may be a relationship between indication and being indicated, configuration and being configured, etc.

The "multiple" mentioned herein means two or more. "And/or" describes an association relationship between associated objects, and indicates that there may be three relationships. For example, A and/or B may indicate three situations, that is, A exists alone, A and B exist simultaneously, and B exists alone. A character "/" usually indicates that the previous and next associated objects are in a "or" relationship.

Furthermore, numbers of operations described herein only exemplarily show a possible execution sequence among the operations. In some other embodiments, the above operations may not be executed according to an order of the numbers, for example, two different numbers of operations are executed simultaneously, or two different numbers of operations are executed in a reverse order to that shown in the drawings, which are not limited in the embodiments of the disclosure.

Those skilled in the art should be aware that in the above one or more examples, the functions described in the embodiments of the disclosure may be implemented by hardware, software, firmware or any combination thereof. When the functions are implemented by software, these functions may be stored in a computer-readable medium, or transmitted as one or more instructions or codes on the computer-readable medium. The computer-readable medium includes a computer storage medium and a communication medium, and the communication medium includes any medium which facilitates transferring a computer program from one place to another place. The storage medium may be any available medium which may be accessed by a general-purpose or special-purpose computer.

## Claims

1. A method of data transmission, performed by an access network device, the method comprising:
determining (410) a first object to which a to-be-transmitted packet belongs, the first object comprising one of an Application Data Unit, ADU, a frame, a coded slice, or a unit set; and
transmitting (420) the packet based on transmission requirements and/or QoS parameters for the first object,
wherein determining (410) the first object to which the packet belongs comprises:
determining the first object to which the packet belongs according to an identifier for the packet, wherein packets belonging to a same first object have a same identifier,
the method further comprising:
in a first situation, performing (610) transmission processing on the packet belonging to the first object by using a transmission processing mechanism corresponding to the first situation, wherein the first situation comprises:
existence of a packet which is unable to be transmitted or successfully transmitted within the transmission requirements and/or QoS parameters for the first object,
wherein performing (610) the transmission processing on the packet belonging to the first object by using the transmission processing mechanism corresponding to the first situation comprises:
deleting all packets of the first object, or stopping transmission of the packet belonging to the first object.

2. The method of claim 1, wherein the transmission requirements and/or the QoS parameters comprise at least one of:
a cycle for the first object, a data arrival time for the first object, a data arrival time interval for the first object, a data arrival time period for the first object, a data arrival start time for the first object, a data arrival end time for the first object, a data arrival offset for the first object, a packet error rate for the first object, a packet delay budget for the first object, or a packet size for the first object.

3. The method of claim 1 or 2, wherein the transmission requirements and/or the QoS parameters are provided for a single QoS flow; or, the transmission requirements and/or the QoS parameters are provided for a plurality of QoS flows.

4. The method of claim 1, wherein the identifier is carried in the packet.

5. The method of any one of claims 1 to 4, wherein the identifier for the packet comprises ADU number, serial number of frame, coded slice number, or unit set number.

6. The method of any one of claims 1 to 5, wherein the identifier is added or sent by User Plane Function, UPF of a core network device.

7. The method of any one of claims 1 to 6, wherein the identifier is carried in a header of the packet.

8. The method of any one of claims 1 to 7, further comprising:
adding a label to the packet, the label being configured to distinguish the first object to which the packet belongs.

9. The method of any one of claims 1 to 8, wherein the transmission requirements and/or the QoS parameters are sent to the access network device together with Time Sensitive Communication Auxiliary Information, TSCAI, and/or other QoS parameters, wherein the other QoS parameters comprise at least one of 5G QoS Identifier, 5QI, Allocation and Retention Priority, ARP, or a bit rate.

10. The method of any one of claims 1 to 9, wherein the transmission requirements and/or the QoS parameters are sent to the access network device by a core network device, and the core network device comprises one of a Policy Control Function, PCF, a Session Management Function, SMF, or a User Plane Function, UPF.

11. An access network device, comprising:
a determination module (910), configured to determine a first object to which a to-be-transmitted packet belongs, the first object comprising one of an Application Data Unit, ADU, a frame, a coded slice, or a unit set; and
a transmission module (920), configured to transmit the packet based on transmission requirements and/or QoS parameters for the first object,
wherein the determination module (910) is specifically configured to: determine the first object to which the packet belongs according to an identifier for the packet, wherein packets belonging to a same first object have a same identifier,
wherein the access network device performs, in a first situation, transmission processing on the packet belonging to the first object by using a transmission processing mechanism corresponding to the first situation, wherein the first situation comprises:
existence of a packet which is unable to be transmitted or successfully transmitted within the transmission requirements and/or QoS parameters for the first object,
wherein the performing the transmission processing on the packet belonging to the first object by using the transmission processing mechanism corresponding to the first situation comprises:
deleting all packets of the first object, or stopping transmission of the packet belonging to the first object.

12. The access network device of claim 11, wherein the transmission requirements and/or the QoS parameters comprise at least one of:
a cycle for the first object, a data arrival time for the first object, a data arrival time interval for the first object, a data arrival time period for the first object, a data arrival start time for the first object, a data arrival end time for the first object, a data arrival offset for the first object, a packet error rate for the first object, a packet delay budget for the first object, or a packet size for the first object.

13. The access network device of claim 11 or 12, wherein the transmission requirements and/or the QoS parameters are provided for a single QoS flow; or, the transmission requirements and/or the QoS parameters are provided for a plurality of QoS flows.

## Patentansprüche

1. Verfahren zur Datenübertragung, durchgeführt durch eine Zugangsnetzvorrichtung, wobei das Verfahren Folgendes umfasst:
Bestimmen (410) eines ersten Objekts, zu dem ein zu übertragendes Paket gehört, wobei das erste Paket eine Anwendungsdateneinheit bzw. Application Data Unit, ADU, einen Frame, eine codierte Slice oder einen Einheitensatz umfasst, und
Übertragen (420) des Pakets auf der Grundlage von Übertragungsanforderungen und/oder von QoS-Parametern für das erste Objekt,
wobei Bestimmen (410) des ersten Objekts, zu dem das Paket gehört, Folgendes umfasst:
Bestimmen des ersten Objekts, zu dem das Paket gehört, gemäß einer Kennung für das Paket, wobei Pakete, die zu einem selben ersten Objekt gehören, eine selbe Kennung aufweisen,
wobei das Verfahren ferner Folgendes umfasst:
in einer ersten Situation, Durchführen (610) von Übertragungsverarbeitung an dem Paket, das zu dem ersten Objekt gehört, unter Verwendung eines Übertragungsverarbeitungsmechanismus, der der ersten Situation entspricht, wobei die erste Situation Folgendes umfasst:
Existenz eines Pakets, das nicht übertragen oder innerhalb der Übertragungsanforderungen und/oder QoS-Parameter für das erste Objekt erfolgreich übertragen werden kann,
wobei Durchführen (610) der Übertragungsverarbeitung an dem Paket, das zu dem ersten Objekt gehört, unter Verwendung des Übertragungsverarbeitungsmechanismus, welcher der ersten Situation entspricht, Folgendes umfasst:
Löschen aller Pakete des ersten Objekts oder Stoppen der Übertragung des Pakets, das zu dem ersten Objekt gehört.

2. Verfahren nach Anspruch 1, wobei die Übertragungsanforderungen und/oder die QoS-Parameter mindestens eines der Folgenden umfassen:
einen Zyklus für das erste Objekt, eine Datenankunftszeit für das erste Objekt, ein Datenankunftszeitintervall für das erste Objekt, eine Datenankunftszeitdauer für das erste Objekt, eine Datenankunftsstartzeit für das erste Objekt, eine Datenankunftsendzeit für das erste Objekt, einen Datenankunftsversatz für das erste Objekt, eine Paketfehlerrate für das erste Objekt, ein Paketverzögerungsbudget für das erste Objekt oder eine Paketgröße für das erste Objekt.

3. Verfahren nach Anspruch 1 oder 2, wobei die Übertragungsanforderungen und/oder die QoS-Parameter für einen einzigen QoS-Fluss vorgesehen sind oder die Übertragungsanforderungen und/oder die QoS-Parameter für eine Vielzahl von QoS-Flüssen vorgesehen sind.

4. Verfahren nach Anspruch 1, wobei die Kennung in dem Paket geführt wird.

5. Verfahren nach einem der Ansprüche 1 bis 4, wobei die Kennung für das Paket ADU-Nummer, Seriennummer eines Frames, Codierte-Slice-Nummer oder Einheitensatznummer umfasst.

6. Verfahren nach einem der Ansprüche 1 bis 5, wobei die Kennung durch eine Benutzerebenenfunktion bzw. User Plane Function, UPF, einer Kernnetzvorrichtung hinzugefügt oder gesendet wird.

7. Verfahren nach einem der Ansprüche 1 bis 6, wobei die Kennung in einem Header des Pakets geführt wird.

8. Verfahren nach einem der Ansprüche 1 bis 7, ferner umfassend:
Hinzufügen eines Labels zu dem Paket, wobei das Label ausgelegt ist zum Unterscheiden des ersten Objekts, zu dem das Paket gehört.

9. Verfahren nach einem der Ansprüche 1 bis 8, wobei die Übertragungsanforderungen und/oder die QoS-Parameter an die Zugangsnetzvorrichtung gesendet werden zusammen mit zeitkritischen Kommunikationshilfsinformationen bzw. Time Sensitive Communication Auxiliary Information, TSCAI, und/oder anderen QoS-Parametern, wobei die anderen QoS-Parameter mindestens einen von 5G-QoS-Kennung, 5QI, Zuweisungs- und Rückhaltepriorität bzw. Allocation and Retention Priority, ARP, oder Bitrate umfassen.

10. Verfahren nach einem der Ansprüche 1 bis 9, wobei die Übertragungsanforderungen und/oder die QoS-Parameter durch eine Kernnetzvorrichtung an die Zugangsnetzvorrichtung gesendet werden und die Kernnetzvorrichtung eine von einer Richtliniensteuerungsfunktion bzw. Policy Control Function, PCF, einer Sitzungsmanagementfunktion bzw. Session Management Function, SMF, oder einer Benutzerebenenfunktion bzw. User Plane Function, UPF, umfasst.

11. Zugangsnetzvorrichtung, umfassend:
ein Bestimmungsmodul (910), ausgelegt zum Bestimmen eines ersten Objekts, zu dem ein zu übertragendes Paket gehört, wobei das erste Paket eine Anwendungsdateneinheit bzw. Application Data Unit, ADU, einen Frame, eine codierte Slice oder einen Einheitensatz umfasst, und
ein Übertragungsmodul (920), ausgelegt zum Übertragen des Pakets auf der Grundlage von Übertragungsanforderungen und/oder von QoS-Parametern für das erste Objekt,
wobei das Bestimmungsmodul (910) insbesondere ausgelegt ist zum: Bestimmen des ersten Objekts, zu dem das Paket gehört, gemäß einer Kennung für das Paket, wobei Pakete, die zu einem selben ersten Objekt gehören, eine selbe Kennung aufweisen,
wobei die Zugangsnetzvorrichtung, in einer ersten Situation, Übertragungsverarbeitung an dem Paket, das zu dem ersten Objekt gehört, durchführt, unter Verwendung eines Übertragungsverarbeitungsmechanismus, welcher der ersten Situation entspricht, wobei die erste Situation Folgendes umfasst:
Existenz eines Pakets, das nicht übertragen oder innerhalb der Übertragungsanforderungen und/oder QoS-Parameter für das erste Objekt erfolgreich übertragen werden kann,
wobei das Durchführen der Übertragungsverarbeitung an dem Paket, das zu dem ersten Objekt gehört, unter Verwendung des Übertragungsverarbeitungsmechanismus, welcher der ersten Situation entspricht, Folgendes umfasst:
Löschen aller Pakete des ersten Objekts oder Stoppen der Übertragung des Pakets, das zu dem ersten Objekt gehört.

12. Zugangsnetzvorrichtung nach Anspruch 11, wobei die Übertragungsanforderungen und/oder die QoS-Parameter mindestens eines der Folgenden umfassen:
einen Zyklus für das erste Objekt, eine Datenankunftszeit für das erste Objekt, ein Datenankunftszeitintervall für das erste Objekt, eine Datenankunftszeitdauer für das erste Objekt, eine Datenankunftsstartzeit für das erste Objekt, eine Datenankunftsendzeit für das erste Objekt, einen Datenankunftsversatz für das erste Objekt, eine Paketfehlerrate für das erste Objekt, ein Paketverzögerungsbudget für das erste Objekt oder eine Paketgröße für das erste Objekt.

13. Zugangsnetzvorrichtung nach Anspruch 11 oder 12, wobei die Übertragungsanforderungen und/oder die QoS-Parameter für einen einzigen QoS-Fluss vorgesehen sind oder die Übertragungsanforderungen und/oder die QoS-Parameter für eine Vielzahl von QoS-Flüssen vorgesehen sind.

## Revendications

1. Procédé de transmission de données, mis en œuvre par un dispositif de réseau d'accès, le procédé comprenant :
la détermination (410) d'un premier objet auquel un paquet à transmettre appartient, le premier objet comprenant un élément parmi une unité de données d'application, ADU, une trame, une tranche codée ou un ensemble d'unités ; et
la transmission (420) du paquet sur la base des exigences de transmission et/ou des paramètres QoS pour le premier objet,
dans lequel la détermination (410) du premier objet auquel le paquet appartient comprend :
la détermination du premier objet auquel le paquet appartient en fonction d'un identifiant pour le paquet, dans lequel des paquets appartenant à un même premier objet ont un même identifiant,
le procédé comprenant en outre :
dans une première situation, l'exécution (610) d'un traitement de transmission sur le paquet appartenant au premier objet en utilisant un mécanisme de traitement de transmission correspondant à la première situation, dans lequel la première situation comprend :
l'existence d'un paquet qui ne peut pas être transmis ou transmis avec succès au sein des exigences de transmission et/ou des paramètres QoS pour le premier objet,
dans lequel l'exécution (610) du traitement de transmission sur le paquet appartenant au premier objet en utilisant le mécanisme de traitement de transmission correspondant à la première situation comprend :
l'effacement de tous les paquets du premier objet ou l'arrêt de la transmission du paquet appartenant au premier objet.

2. Procédé selon la revendication 1, dans lequel les exigences de transmission et/ou les paramètres QoS comprennent au moins un élément parmi :
un cycle pour le premier objet, un moment d'arrivée des données pour le premier objet, un intervalle d'un moment d'arrivée des données pour le premier objet, une période d'un moment d'arrivée des données pour le premier objet, un moment de début d'arrivée des données pour le premier objet, un moment de fin d'arrivée des données pour le premier objet, un décalage d'arrivée des données pour le premier objet, un taux d'erreur de paquet pour le premier objet, un budget de retard de paquet pour le premier objet ou une taille de paquet pour le premier objet.

3. Procédé selon la revendication 1 ou 2, dans lequel les exigences de transmission et/ou les paramètres QoS sont fournis pour un seul flux QoS ; ou les exigences de transmission et/ou les paramètres QoS sont fournis pour une pluralité de flux QoS.

4. Procédé selon la revendication 1, dans lequel l'identifiant est acheminé dans le paquet.

5. Procédé selon l'une quelconque des revendications 1 à 4, dans lequel l'identifiant pour le paquet comprend un numéro ADU, un numéro de trame en série, un numéro de tranche codée ou un numéro d'ensemble d'unités.

6. Procédé selon l'une quelconque des revendications 1 à 5, dans lequel l'identifiant est ajouté ou envoyé par une fonction de plan d'utilisateur, UPF, d'un dispositif de réseau central.

7. Procédé selon l'une quelconque des revendications 1 à 6, dans lequel l'identifiant est acheminé dans un entête du paquet.

8. Procédé selon l'une quelconque des revendications 1 à 7, comprenant en outre :
l'ajout d'une étiquette au paquet, l'étiquette étant conçue pour distinguer le premier objet auquel le paquet appartient.

9. Procédé selon l'une quelconque des revendications 1 à 8, dans lequel les exigences de transmission et/ou les paramètres QoS sont envoyés au dispositif de réseau d'accès conjointement avec des informations auxiliaires de communication sensibles au temps, TSCAI, et/ou d'autres paramètres QoS, dans lequel les autres paramètres QoS comprennent au moins un élément parmi un identifiant QoS 5G, 5QI, une priorité d'attribution et de rétention, ARP, ou un débit binaire.

10. Procédé selon l'une quelconque des revendications 1 à 9, dans lequel les exigences de transmission et/ou les paramètres QoS sont envoyés au dispositif de réseau d'accès par un dispositif de réseau central, et le dispositif de réseau central comprend un élément parmi une fonction de contrôle de règles, PCF, une fonction de gestion de session, SMF, ou une fonction de plan d'utilisateur, UPF.

11. Dispositif de réseau d'accès, comprenant :
un module de détermination (910), configuré pour déterminer un premier objet auquel un paquet à transmettre appartient, le premier objet comprenant un élément parmi une unité de données d'application, ADU, une trame, une tranche codée ou un ensemble d'unités ; et
un module de transmission (920), configuré pour transmettre le paquet sur la base des exigences de transmission et/ou des paramètres QoS pour le premier objet,
dans lequel le module de détermination (910) est configuré spécifiquement pour : déterminer le premier objet auquel le paquet appartient en fonction d'un identifiant pour le paquet, dans lequel des paquets appartenant à un même premier objet ont un même identifiant,
dans lequel le dispositif de réseau d'accès exécute, dans une première situation, un traitement de transmission sur le paquet appartenant au premier objet en utilisant un mécanisme de traitement de transmission correspondant à la première situation, dans lequel la première situation comprend :
l'existence d'un paquet qui ne peut pas être transmis ou transmis avec succès au sein des exigences de transmission et/ou des paramètres QoS pour le premier objet,
dans lequel l'exécution du traitement de transmission sur le paquet appartenant au premier objet en utilisant le mécanisme de traitement de transmission correspondant à la première situation comprend :
l'effacement de tous les paquets du premier objet ou l'arrêt de la transmission du paquet appartenant au premier objet.

12. Dispositif de réseau d'accès selon la revendication 11, dans lequel les exigences de transmission et/ou les paramètres QoS comprennent au moins un élément parmi :
un cycle pour le premier objet, un moment d'arrivée des données pour le premier objet, un intervalle d'un moment d'arrivée des données pour le premier objet, une période d'un moment d'arrivée des données pour le premier objet, un moment de début d'arrivée des données pour le premier objet, un moment de fin d'arrivée des données pour le premier objet, un décalage d'arrivée des données pour le premier objet, un taux d'erreur de paquet pour le premier objet, un budget de retard de paquet pour le premier objet ou une taille de paquet pour le premier objet.

13. Dispositif de réseau d'accès selon la revendication 11 ou 12, dans lequel les exigences de transmission et/ou les paramètres QoS sont fournis pour un seul flux QoS ; ou les exigences de transmission et/ou les paramètres QoS sont fournis pour une pluralité de flux QoS.
